(19) Europäisches Patentamt
European Patent Office
Office européen des brevets

(11) Veröffentlichungsnummer: **0 281 970**
**A2**

(12) **EUROPÄISCHE PATENTANMELDUNG**

(21) Anmeldenummer: **88103433.4**

(22) Anmeldetag: **05.03.88**

(51) Int. Cl.⁴: **H02B 1/12**

(30) Priorität: **10.03.87 DE 3707596**

(43) Veröffentlichungstag der Anmeldung:
**14.09.88 Patentblatt 88/37**

(84) Benannte Vertragsstaaten:
**BE DE FR GB IT NL**

(71) Anmelder: **CEAG Licht- und
Stromversorgungstechnik GmbH
Senator-Schwarz-Ring 26
D-4770 Soest(DE)**

(72) Erfinder: **Liedtke, Heinz
Winandweg 12
D-4600 Dortmund 72(DE)**
Erfinder: **Neumann, Reinhard
Rosegger Strasse 3
D-4044 Kaarst 1(DE)**

(74) Vertreter: **Rupprecht, Klaus, Dipl.-Ing. et al
c/o CEAG Licht- und
Stromversorgungstechnik GmbH ZPT
Postfach 100351
D-6800 Mannheim 1(DE)**

(54) Explosions- oder schlagwettergeschütztes Gehäuse für elektrische Betriebsmittel.

(57)     2.1   Ein   explosionsgeschütztes   oder -
schlagwettergeschütztes Gehäuse, das aus Kunststoff besteht, ist an seiner Oberfläche statisch aufladbar. Unter bestimmten ungünstigen Umständen
kann eine Entladung dieser statischen Aufladungen
zu einem Funken führen, dessen Energie zur
Zündung von umgebendem explosiblem Gemisch
ausreicht. Das Material, aus dem derartige Gehäuse
bestehen, wird meist aus mit elektrisch leitfähigem
Material versetzten Kunststoffen hergestellt, bei
denen der Oberflächenwiderstand kleiner als $10^9$
Ohm ist.

     2.2 Um normalen Kunststoff zu verwenden,
wird erfindungsgemäß an einer Fläche, deren
Außenrand einen Bereich von mehr als 100 cm² 
umgrenzt, ein Absatz (18) vorgesehen, der diese
Fläche bzw. diesen Bereich unterteilt in Bereiche mit
kleiner 100 cm².

     2.3 Derartige Gehäuse sind in schlagwetter-
und/oder explosionsgefährdeten Bereichen einzusetzen.

Fig. 1

## Explosions-oder schlagwettergeschütztes Gehäuse für elektrsche Betriebsmittel

Die Erfindung betrifft ein Explosions-oder -schlagwettergeschütztes Gehäuse für elektrische Betriebsmittel, dessen Oberlfäche so ausgebildet ist, daß eine elektrostatische Aufladung nicht zur Zündung einer explosiblen Umgebungsatmosphäre ausreicht.

Gehäuse der eingangs genannten Art sind in der Vergangenheit auf unterschiedliche Weise realisiert worden. Zum einen ist es möglich, als Material, aus dem das Gehäuse hergestellt wird, solches zu verwenden, dessen Oberflächenwiderstand kleiner als $10^9$ Ohm ist. Als derartige Materialien können Kunststoffe Verwendung finden, in die elektrisch leitfähige Teilchen eingebettet sind, beispielsweise elektrisch leitfähige Teilchen in Form von Graphit. Das Problem hierbei besteht darin, daß die Gehäusefarbe durch diese elektrisch leitfähigen Teile vorherbestimmt ist.

Insbesondere bei Langfeldleuchten hat man vorgeschlagen, die Oberfläche beispielsweise der transparenten Abdeckwanne mit einer Netzstruktur aus elektrisch leitfähigem Material zu überziehen, deren Maschenweite so bemessen ist, daß die innerhalb einer Masche befindliche Abdeckwannenoberfläche einen Wert von kleiner als 100 cm² einnimmt. Eine solche Oberflächengestaltung ist aber insbesondere bei Gehäusen, die elektrische Betriebsmittel aufnehmen, wie z. B. Steckdosen und dergleichen, nicht möglich.

Insbesondere bei solchen Gehäusen war man daher grundsätzlich darauf angewiesen, geeignetes Material zu verwenden.

Aufgabe der Erfindung ist es daher, ein explosions-oder schlagwettergeschütztes Gehäuse der eingangs genannten Art zu schaffen, das aus normalem, handelsüblichen Kunststoff hergestellt ist, ohne daß der Oberflächenwiderstand von Bedeutung ist.

Diese Aufgabe wird erfindungsgemäß dadurch gelöst, daß an Gehäuseaußenflächen Vorsprünge oder Vertiefungen vorgesehen sind, die die Außenflächenerstreckung so unterbrechen, daß eine maximale zusammenhängende Fläche von höchstens 100 cm² gebildet ist.

Eine vorteilhafte Ausgestaltung der Erfindung kann dahin gehen, daß jeder Außenbereich, dessen Umfangslinie eine Fläche von mehr als 100 cm² umschreibt, einen erhobenen oder vertieften Absatz aufweist, dessen freie glatte Fläche kleiner als 100 cm² beträgt.

Dabei ist es zweckmäßig, daß der Absatz eine Höhe oder Tiefe von mindestens 8 mm aufweist. Der Absatz kann dabei eine normale Erhöhung oder Vertiefung sein, wie oben angedeutet; der Absatz kann aber auch als Kabelein-und ausführungstülle ausgebildet sein, wie aus dem Anspruch 4 zu entnehmen ist.

Wesentlich ist dabei, daß gemäß kennzeichnenden Merkmalen des Anspruches 5 alle Ecken, Übergänge und dergleichen am Gehäuse, bei der eine Fläche in die andere übergeht, einen Radius von maximal 1 mm aufweisen.

Erfindungsgemäß wird also die Fläche eines Gehäuses so unterbrochen, daß zusammenhängende Flächenbereiche von höchstens 100 cm² gebildet sind, wodurch elektrostatische Aufladungen, die eine das Gehäuse umgebende explosible Außenatmosphäre zünden können, verhindert sind.

Derartige Aufladungen - um dies noch nachzufügen - können beispielsweise dadurch bewirkt werden, daß das Gehäuse mittels geeigneten Materialien gereinigt wird. Es ist allgemein bekannt, daß bei bestimmten Kunststoffen dann elektrostatische Aufladungen entstehen, wenn auf ihren Oberflächen Tücher aus einem geeigneten Material hin-und hergerieben werden. Es hat sich aus herausgestellt, daß selbst dann eine elektrostatische Aufladung gebildet werden kann, wenn jemand mit einem Mantel aus geeignetem Material vorbeigeht und dabei mit dem Mantelstoff auf der Oberfläche des Gehäuses entlangreibt. Diese elektrostatischen Aufladungen können bei geeigneter Größe der Gehäuseoberfläche schon durch einfaches Berühren mit der Hand zu einem Funken führen, der eine Explosion herbeiführt.

Mit der erfindungsgemäßen Ausgestaltung sind zwar immer noch Aufladungen nicht zu vermeiden; aufgrund der begrenzten Fläche ist aber die Energie eines entstehenden Zündfunkens ausreichend klein, sodaß eine Explosion nicht herbeigeführt wird.

Anhand der Zeichnung, in der zwei Ausführungsbeispiele der Erfindung dargestellt sind, soll die Erfindung näher erläutert und beschrieben werden.

Es zeigt:

Figur 1 einen Deckel auf ein Gehäuse und

Figur 2 das Unterteil des Gehäuses, zu dem der Deckel gemäß ·Figur 1 paßt, jeweils in perspektivischer Darstellung.

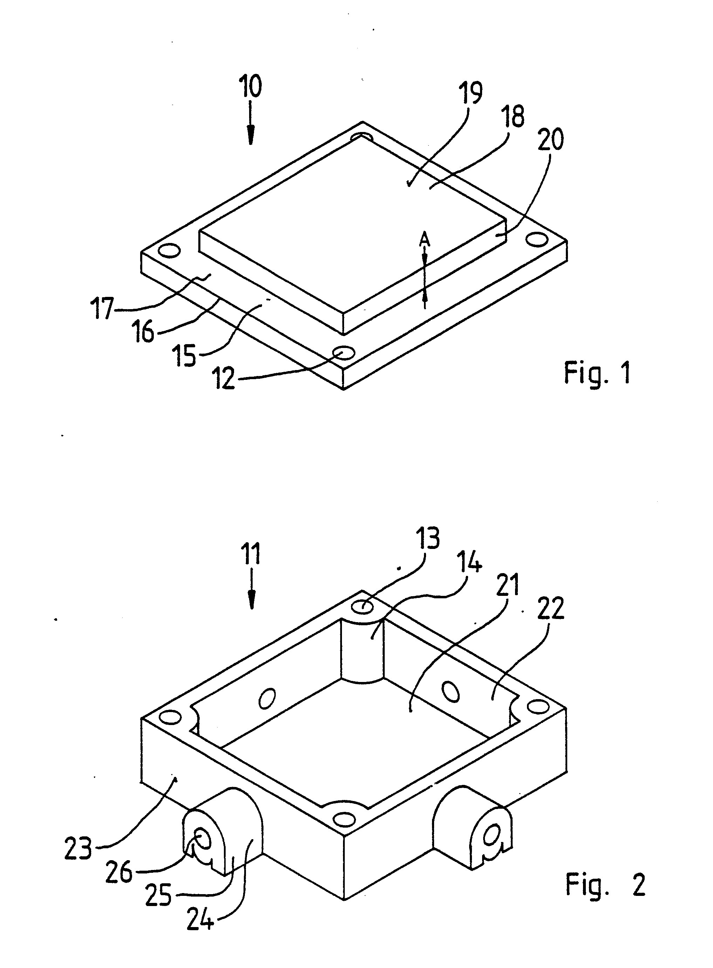

Ein Gehäuse (Figur 1 und 2) ist gebildet aus einem Dekkel 10 und einem Unterteil 11, die beide mittels Schraubenverbindungen miteinander verbunden werden, insoweit, als der Deckel 10 Löcher 12 und das Gehäuseunterteil 11 Gewindebohrungen 13 aufweist, in die durch die Löcher 12 hindurchgesteckte Schrauben (nicht näher dargestellt) eingeschraubt werden können. Die Gewindebohrungen 13 sind an den Ecken angeformt, wobei sie im Bereich von augenartigen Verdickungen 14 der Wände eingebracht sind.

Der Deckel gemäß Figur 1 besitzt eine Grundplatte 15, deren Umfangskante 16 so bemessen ist, daß die durch die Umfangskante 16 umschriebene Fläche 17 größer als 100 cm² ist. Eine solche Fläche 17 würde ausreichen, daß darauf Aufladungen gebildet werden, die dann, wenn sie sich entladen, zu einem Zündfunken führen, welcher eine explosible Umgebungsatmosphäre zünden kann.

Erfindungsgemäß ist auf der Fläche 17 ein Absatz 18 aufgesetzt, wobei der Abstand der oberen Fläche 19 von der Fläche 17, mit A bezeichnet, 8 mm beträgt. Der Absatz 18 ist von einer Absatzrandkante 20 begrenzt, die senkrecht auf der Fläche 17 aufsteht; die Fläche 19 ist kleiner 100 cm². Die Übergangskanten zwischen der Fläche 19 zu den Randkanten 20 bzw. von den Randkanten 20 zu der Fläche 17 bzw. die Ecken an der Grundplatte 15 des Deckels besitzen einen Radius, der höchstens 1 mm beträgt.

Die Figur 2 zeigt das Gehäuseunterteil 11, das ein napfartiges Gehäuse darstellt mit einem Bodenteil 21, an dem senkrecht dazu aufstehende Wandteile 22 angeformt sind. Die Außenflächen 23 der Wandteile besitzen eine Flächenausdehnung von mehr als 100 cm² und aus diesem Grunde wäre das Gehäuseunterteil nicht geeignet, in explosionsgefährdeten Räumen eingesetzt zu werden. Zu diesem Zwekke sind an den Flächen 23 Vorsprünge 24 vorgesehen, die eine senkrecht zu der Fläche 23 verlaufende hufeisenförmige Mantelfläche 25 aufweisen, deren Übergang zur Fläche 23 ebenfalls wieder einen maximal 1 mm Radius aufweist. Der Vorsprung bzw. die Vorsprünge 24 besitzen Bohrungen 26, durch die Kabel ins Innere des Gehäuses eingeführt werden können. Selbstverständlich sind die Außenflächen 24 bzw. 25 ebenfalls kleiner 100 cm².

In der Figur 1 ist ein Deckel dargestellt, der einen flächigen Vorsprung aufweist. Es besteht natürlich auch die Möglichkeit, auf einem Deckel mit entsprechend größeren Abmessungen mehrere solche Vorsprünge bzw. Absätze vorzusehen und diese Absätze in entsprechendem Abstand zueinander auf der großen Fläche zu verteilen. Voraussetzung ist immer, daß zusammenhängende ebene oder gekrümmte, also stetige Fläche gebildet sind, die kleiner als 100 cm² sind, damit eventuell auftretende statische Aufladungen nur zu Funken führen, die umgebende Atmosphäre nicht zur Explosion bringen, d. h. deren Energie zur Zündung der umgebenden Atmosphäre nicht ausreicht.

## Ansprüche

1. Explosions-oder schlagwettergeschütztes Gehäuse für elektrische Betriebsmittel, dessen Oberfläche so antistatisch ausgebildet ist, daß eine elektrostatische Aufladung nicht zur Zündung einer explosiblen Umgebungsatmosphäre ausreicht, dadurch gekennzeichnet, daß an den Gehäuseaußenflächen Vorsprünge (18) oder Vertiefungen vorgesehen sind, die die Außenflächenerstreckung so unterbrechen, daß eine zusammenhängende Ebene oder ggf. gekrümmte Fläche von höchstens 100 cm² gebildet ist.

2. Gehäuse nach Anspruch 1, dadurch gekennzeichnet, daß jeder Außenbereich, dessen Umfangslinie eine Fläche von mehr als 100 cm² umschreibt, einen erhabenen oder vertieften Absatz oder mehrere aufweist, dessen bzw. deren freie glatte Fläche kleiner als 100 cm² ist bzw. sind.

3. Gehäuse nach Anspruch 2, dadurch gekennzeichnet, daß der einzelne Absatz eine Höhe oder Tiefe zu der Umgebung von mindestens 8 mm aufweist.

4. Gehäuse nach einem der vorigen Ansprüche, dadurch gekennzeichnet, daß der Absatz eine Durchbrechung zum Ein-und Ausführen eines Kabels umfaßt.

5. Gehäuse nach einem der vorigen Ansprüche, dadurch gekennzeichnet, daß die Ecken und Übergänge am Gehäuse insbesondere die der Absätze zu den umgebenden Bereichen einen Radius von maximal 1 mm aufweisen.

10

19

18

20

A

17

16

15

12

Fig. 1

11

13

14

21

22

23

26

25

24

Fig. 2